(19) **Europäisches Patentamt**

**European Patent Office**

**Office européen des brevets**

(11) **EP 0 748 705 B1**

(12) **EUROPEAN PATENT SPECIFICATION**

(45) Date of publication and mention
of the grant of the patent:
**17.11.1999 Bulletin 1999/46**

(51) Int. Cl.$^6$: **B60C 3/04**, B60C 11/00

(21) Application number: **96304354.2**

(22) Date of filing: **11.06.1996**

(54) **Pneumatic tyre**

Luftreifen

Pneumatique

(84) Designated Contracting States:
**DE FR GB**

(30) Priority: **13.06.1995 JP 14643095**
**15.03.1996 JP 5921796**

(43) Date of publication of application:
**18.12.1996 Bulletin 1996/51**

(73) Proprietor:
**SUMITOMO RUBBER INDUSTRIES LIMITED**
**Kobe-shi, Hyogo-ken (JP)**

(72) Inventors:
  • **Kakumu, Kiichiro**
    **Kobe-shi, Hyogo-ken (JP)**
  • **Sano, Haruyuki**
    **Osaka-shi, Osaka-fu (JP)**

  • **Tanaka, Masatoshi**
    **Takarazuka-shi, Hyogo-ken (JP)**
  • **Hanya, Masahiro**
    **Kobe-shi, Hyogo-ken (JP)**
  • **Sumida, Mitzunobu**
    **Toyota-shi, Aichi-ken (JP)**
  • **Iwasaki, Naoaki**
    **Akashi-shi, Hyogo-ken (JP)**

(74) Representative:
**Stewart, Charles Geoffrey**
**Dunlop Tyres Ltd**
**Fort Dunlop, Erdington, Birmingham B24 9QT**
**(GB)**

(56) References cited:
**EP-A- 0 413 574**      **EP-A- 0 424 155**
**EP-A- 0 533 085**

Printed by Xerox (UK) Business Services
2.16.7/3.6

**Description**

The present invention relates to a pneumatic tyre, more particularly a belted pneumatic tyre having an improved tread profile being capable of improving the ground contact during cornering.

In the pneumatic tyres, especially in the passenger car tyres, the tread profile usually comprises a single radius or a combination of two or three different radii, for example a larger radius for the tread centre portion and a smaller radius for the tread shoulder portions.

In case of the low aspect ratio radial tyres whose aspect ratio (tyre section height/tyre section width) is less than 0.6, usually, stiff belt layers are disposed in the tread portion to keep the tread profile substantially flat.

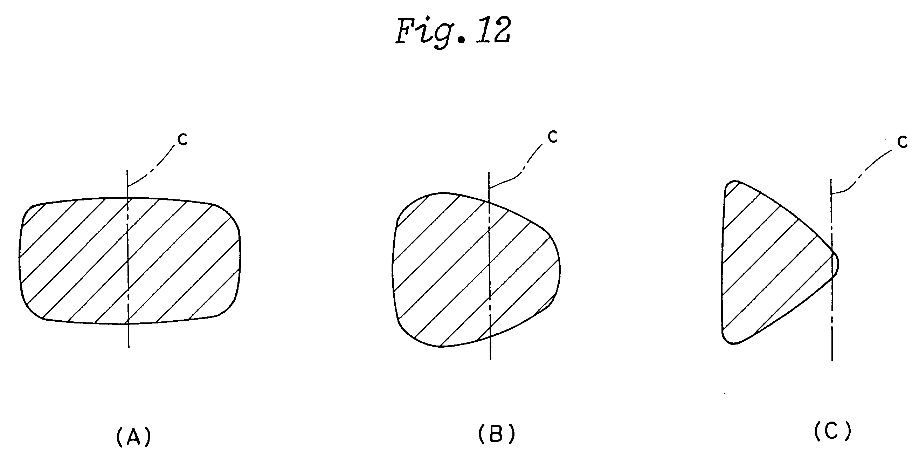

As shown in Fig.11, when such a conventional low aspect ratio belted tyre makes a tight cornering, due to the lateral force, the outside part (a) of the tyre is pressed onto the road surface, but the inside part (b) of the tyre is liable to be lifted from the road surface. Further, the shape of the footprint greatly changes as shown in Fig.12, in which (A) shows the shape during straight running, (B) in the initial stage of cornering (corner entry) and (C) in the middle stage of the cornering (mid corner).

The footprint shape during straight running is a rectangle elongated in the tyre axial direction. But, during cornering, it changes to a completely different triangular shape, and the tyre mainly contacts with the ground on only one side of the tyre equator (c) which greatly decreases the ground contacting area. Therefore, it is difficult to withstand a large lateral force, and the so called cornering limit is easily reached, and the tyre loses road grip. As a result, it becomes impossible to normally control the automobile.

It is therefore the object of the present invention to provide a pneumatic tyre, in which the cornering performance and also the high speed durability and the like are improved.

In order to improve the cornering performance of a tyre, the inventors earnestly studied to decrease the change in the footprint shape and the decrease in the ground contacting area when the running condition is changed from straight running to cornering. As a result, the inventors discovered that these problems can be avoided by decreasing the radius of curvature of the tread profile gradually axially outwardly in a specific manner.

According to the present invention, a pneumatic tyre comprises a carcass extending between a pair of bead portions, a tread rubber disposed radially outside the carcass to define a tread portion with a pair of tread portion edges, a pair of sidewall rubbers disposed axially outside the carcass and extending radially inwardly from the tread portion edges to define a pair of sidewall portions, the tread rubber being harder than the sidewall rubbers, a jointless band belt disposed between the carcass and the tread rubber, the jointless band belt made of at least one organic fibre cord wound spirally continuously at a small angle with respect to the tyre circumferential direction, the tread portion extends axially outwardly beyond ground contact edges, the ground contact edges being the axially outermost edges of the ground contacting region of the tyre under a standard loaded state that the tyre is mounted on a standard rim, inflated to a standard inner pressure and loaded with a standard load and the camber angle is 0 degree, in a tyre meridian section under a standard unloaded state that the tyre is mounted on the standard rim, inflated to the standard inner pressure and not loaded, the profile of the tread portion being provided in at least axially outer part of a point P with a radius of curvature RC which gradually decreases towards the axially outside, the point P being defined on the tread profile on each side of the tyre equatorial plane C at an axial distance of 20% of a half tread width, and the jointless band belt satisfying the following equations (1) and (2)

$$tm > 3Pm*R/E \tag{1}$$

$$0.5 < S < 2.0 \tag{2}$$

where

| | |
|---|---|
| tm | = the strength (kgf) of each organic fibre cord, |
| Pm | = the maximum air pressure (kgf/cm$^2$) for the tyre, |
| R | = the radius (cm) of the jointless band belt measured at the tyre equator C (=diameter/2), |
| E | = the cord count of the jointless band belt per 1cm width, |
| S | = the middle elongation (%) of the organic fibre cord. |

In this invention, the middle elongation S (%) means the elongation measured according to Japanese Industrial Standard, JIS-L1017 "Testing Methods for Chemical Fibre Tyre Cords", 7.7 "Elongation Percentage in Constant Load", 7.7.1 "Test in Standard Condition".

Generally, the half tread width is the axial distance from the tyre equatorial plane C to each edge of the tread portion. However, if the tread rubber defining the tread portion extends radially inwardly beyond the maximum tyre sectional width point M, 50% of the maximum tyre sectional width SW is used instead.

The above-mentioned small angle of the belt cord means the range of 0 +- 5 degrees.

Preferably, the decreasing rate of the radius of curvature RC of the tread profile is substantially constant.

Preferably, the tread portion or tread runner extends to the maximum sectional width point of the tyre.

As to the standard rim, standard pressure and the like, those specified in a standard which is well known in the art, for example JATMA in Japan, TRA in USA, ETRTO in Europe and the like is used.

From the results of tests conducted by the inventors, it was discovered that cornering performance of a tyre can be unexpectedly improved when the tyre is provided with a unique tread profile of which the radius of curvature is gradually decreased towards the axially outside from the above-mentioned specific point P.

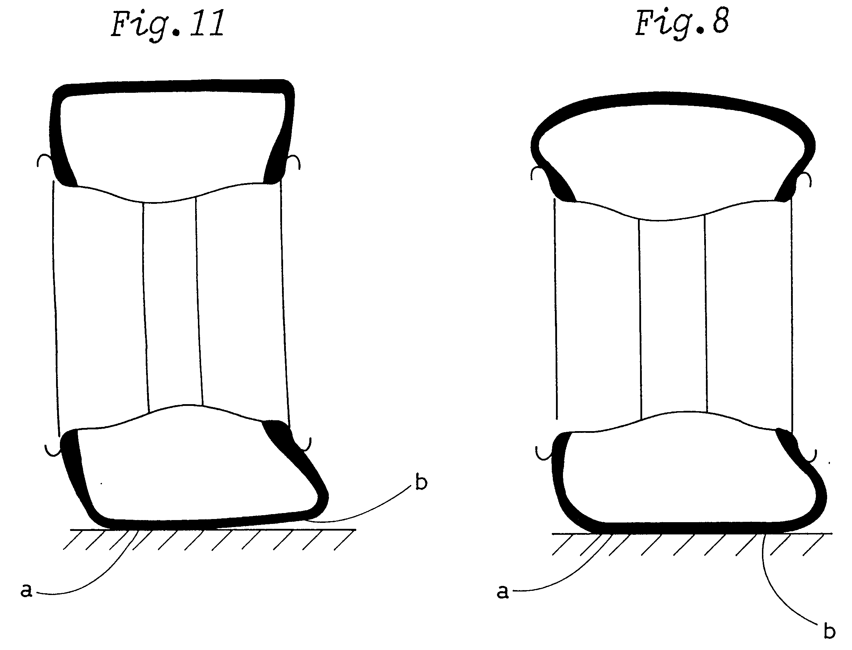

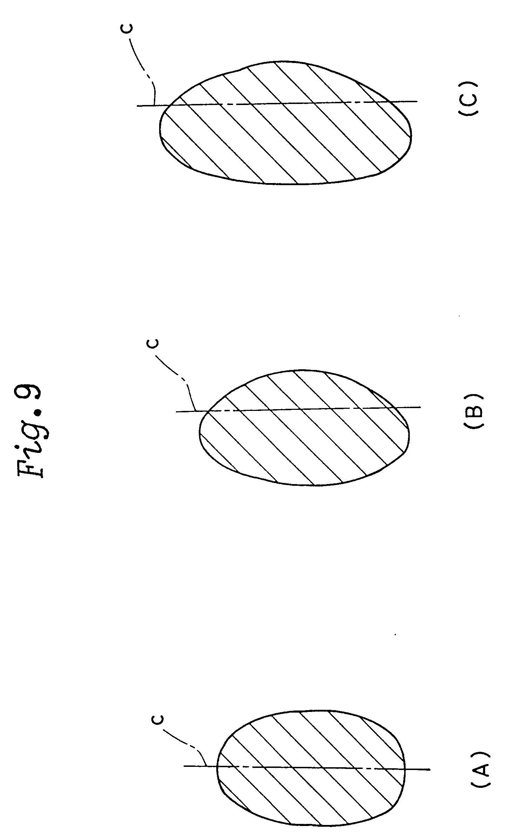

Fig.8 shows a cross section of a tyre according to the present invention during cornering under the same condition as in Fig.11. Corresponding to Fig.12, the footprint of the tyre according to the invention is shown in Fig.9, wherein (A) shows the shape during straight running, (B) in the initial stage of cornering and (C) in the middle stage of the cornering.

In the tyre according to the present invention, as shown in those figures, the lifting of the inside part (b) during cornering is effectively controlled. The footprint shape during straight running is generally an ellipse elongated in the tyre circumferential direction. If the running condition changes to the initial stage of cornering and then the middle stage thereof, the footprint shape maintains a generally ellipse shape similar to that in the straight running, and the ground contacting area is rather maintained or increased than decreased.

As explained above, this can be achieved by the inventors' new concept that the tread portion is provided with a latent ground contacting region, which region does not contact with the ground during straight running, but contacts with the ground during cornering, thereby being capable of increasing the ground contacting area in comparison with that in the straight running, and maintaining the substantially same footprint shape. As a result, the cornering limit is increased, and the steering stability can be improved to a remarkably high level.

Further, as the footprint shape is an ellipse where the ground contacting width is smaller than the ground contacting length, drainage is enhanced and the wet grip performance is improved. Accordingly, both the wet and dry cornering performances are effectively improved.

As explained above, the above-mentioned unique tread profile is very important for improving the cornering performance. Therefore, it is also very important to maintain such tread profile during the whole tyre life. In this regard, the above-mentioned jointless band belt plays an important part as a hoop to maintain the profile. Therefore, the organic fibre cords of the jointless band belt must satisfy the above-mentioned equation (1). If the strength tm < 3Pm*R/E, in the last stage of the tyre life, the cords are fatigued and become liable to be cut. Thus, not only it becomes impossible to maintain the profile, but also the durability, uniformity and the like are greatly deteriorated.

Further, the middle elongation S (%) of the organic fibre cords is an important parameter in addition to the strength tm. If the middle elongation S (%) > 2 (%), the amount of elongation is large when the tyre is inflated, and stress concentrates on the bottom of tread grooves and cracks are liable to occur. Also, the profile becomes liable to vary depending on the tyre pressure. If the middle elongation S (%) < 0.5 (%), the amount of elongation is too small during vulcanising the tyre even if a very high pressure (about 20kgf/cm$^2$) is applied to the inside of the raw tyre placed in a mould. As a result, the moulding becomes poor. For example, bare is liable to be occur, in such a case, of course, it is impossible to obtain the intended profile.

Embodiments of the present invention will now be described in detail in conjunction with the accompanying drawings.

Fig.1 is a cross sectional view of an embodiment of the present invention for explaining the tread profile;
Fig.2 is a cross sectional view for explaining the belt profile;
Fig.3 is a cross sectional view showing a modification of the tread portion;
Fig.4 is a cross sectional view showing a modification of the belt structure;
Fig.5 is a developed plan view of an example of the tread pattern;
Fig.6 is a developed plan view of another example of the tread pattern;
Fig.7 is a graph for explaining a locus of an equation used for defining the tread profile;
Fig.8 is a schematic view showing a tyre cross section of the present invention during cornering;
Fig.9 is a diagram showing the footprint change in the present invention;
Fig.10 is a diagram for explaining the stress produced in the ground contacting region;
Fig.11 is a schematic view showing a cross section of the conventional tyre during cornering; and
Fig.12 is a diagram showing the footprint change in the conventional tyre.

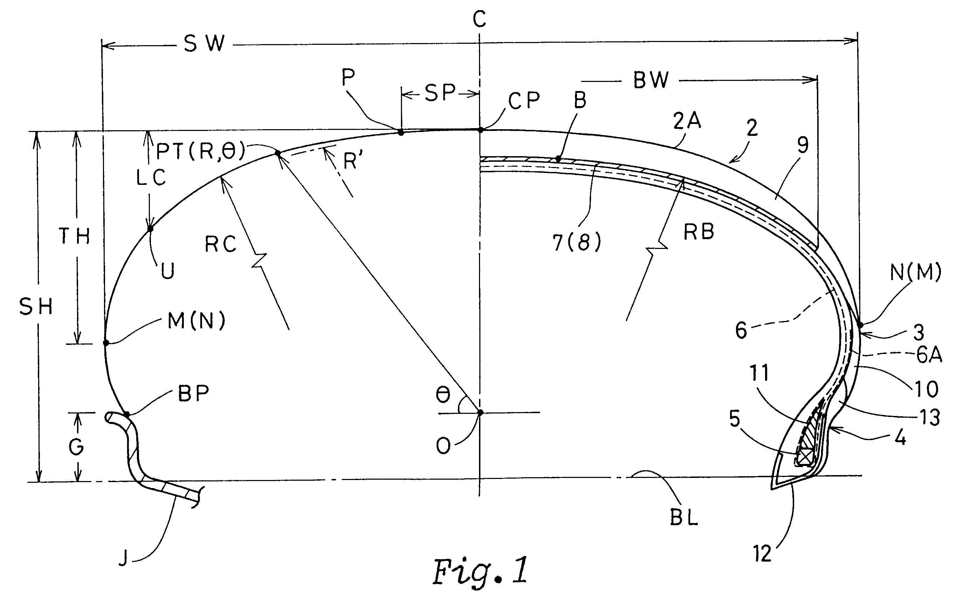

In Figs.1-3, a right half shows the inside structure of the tyre, and a left half shows the contour of the tyre.

The pneumatic tyre shown corresponds to a passenger radial tyre, the tyre size of which is 215/45R16 to be mounted on a wheel rim of a size 16X7 1/2.

The pneumatic tyre comprises a pair of bead cores 5 each disposed in each bead portion 4, a carcass 6 comprising at least one carcass ply extending between the bead portions 4 and having a pair of turnup portions 6A each turned up around each of the bead cores 5 from the inside to outside of the tyre, and a belt 7 disposed radially outside the carcass 6 and inside the tread portion 2.

The carcass 6 comprises at least one ply, in this embodiment only one ply of cords arranged radially at angle of from 90 to 65 degrees with respect to the tyre equator C. For the carcass cords, organic fibre cords having a relatively low modulus, e.g. nylon, rayon, polyester and the like are preferably used. In this embodiment, polyester cords are used.

A tread rubber 9 is disposed radially outside the belt 7 to define the tread portion 2. The JIS A hardness of the tread rubber 9 is preferably set in the range of from 50 to 80 degrees.

A sidewall rubber 10 is disposed axially outside of the carcass 6 to define each sidewall portion 3. The JIS A hardness of the sidewall rubber 10 is preferably set in the range of from 35 to 65 degrees, and lower than that of the tread rubber 9. The boundary on the tyre outer surface between the tread rubber 9 and the sidewall rubber 10 is the tread portion edge N.

A clinch apex 13 made of hard rubber is disposed along the axially outer surface of the bead portion 4. Further, each bead portion 4 is provided between each turnup portion and the main portion of the carcass with a bead apex 11 made of hard rubber extending radially outwardly from the radially outer surface of the bead core 5. Furthermore, a chafer 12 extending along the axially inner surface and bottom of the bead portion 4 and interposed between the clinch apex 13 and the bead apex 11 is provided.

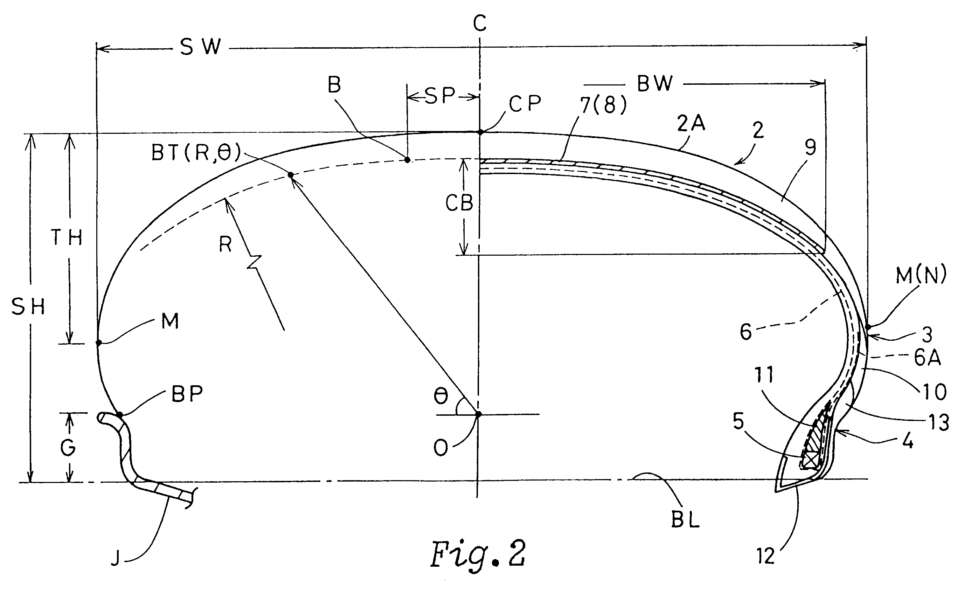

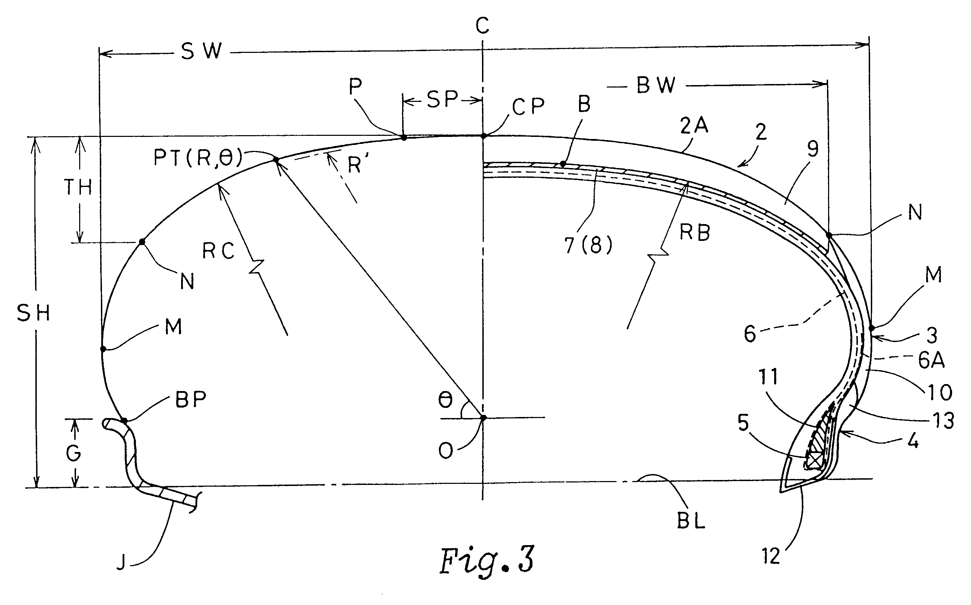

The tread rubber 9 preferably extends near to the maximum tyre section width points M, as shown in Fig.1. That is, the axial edges N thereof reach to the point M. It is also possible that the tread rubber 9 extends slightly beyond the points M as shown in Fig.2, or terminates before the points M as shown in Fig.3. In Fig.3, the axial width of the tread rubber 9 is about 0.85 times the maximum tyre section width SW. Accordingly, the size of the sidewall rubber 10 increases in comparison with Fig.1, and the tyre is increased in suppleness in the sidewall portions 3, which helps a smooth contact of the latent ground contacting region with the ground. In this regard, therefore, this is more preferable.

In any case, the tread portion 2 defined by the tread rubber 9 extends axially outwardly beyond the ground contact edges. Here, the ground contact edges are the axially outermost edges of the ground contacting region of the tyre under a standard loaded state that the tyre is mounted on a standard rim, inflated to a standard inner pressure and loaded with a standard load and the camber angle is 0 degree.

In a meridian section of the tyre, the tread profile 2A, which is defined by the outer surface of the tread portion 2, is defined by a variable radius of curvature RC.

In the embodiment tyre shown in Figs.1, 2, 3 and 4, in the whole region from the tyre equatorial plane C to the maximum tyre sectional width point M, the radius of curvature RC is gradually decreased as the axial distance from the tyre equator C increases.

However, a matter of importance is to gradually decrease the radius of curvature RC of the tread profile 2A in at least a region axially outwards of the specific point P. This point P is disposed on each side of the tyre equatorial plane C and spaced apart therefrom by an axial distance SP, the axial distance SP is 20% of the axial distance measured from the tyre equatorial plane C to the tread portion edge N.

In other words, the remaining region extending between the points P and P across the tyre equatorial plane C can be defined by one of or a combination of a straight line, a convex line having a single radius of curvature, a convex line having a variable radius of curvature RC decreasing gradually axially outwards, and a concave line. This region between the points P and P usually contacts with the ground at a sufficient pressure. Therefore, the effect of forming this region with a gradually decreasing radius RC is fairly small. This is the reason why the limitation of the tread profile 2A to the variable radius RC can except the range between the points P and P.

The ratio (TH/SW) of the radial distance TH between the tread portion edges N and the tyre equator point CP to the maximum tyre section width SW is in the range of from 0.12 to 0.30. Preferably, the ratio (TH/SW) is 0.25 to 0.3, about 0.27, in Figs.1 and 2. In Fig.3, the ratio (TH/SW) is about 0.12 to 0.20.

Incidentally, in the conventional passenger tyres and truck/bus tyres, the designers devote themselves to make the ground pressure distribution more even by making the belt flat, and as a result, the TH/SW ratio is smaller than about 0.05.

In this embodiment, using the following equation (3) obtained through the inventors' studies, the tread profile 2A is defined, that is,

$$R(\theta)=(92.46304+50.02951 \text{X}\theta-109.1216 \text{X}\theta^2 +43.74487 \text{X}\theta^3 +7.385639 \text{X}\theta^4 -4.776894 \text{X}\theta^5) \text{X (SW/194)} \qquad (3)$$

This equation (3) is expressed in polar co-ordinates (R, $\theta$), in which a point PT is expressed by a distance R from the origin (O) and an angle $\theta$ made with a polar axis. The distance R is a function of the angle $\theta$.

As shown in Fig.1 or 3, in a meridian section of the tyre, the origin (O) is set on the tyre equator C, and the polar axis is set in parallel with the tyre axis. The range of the angle $\theta$ is from 0 to $\pi/2$ radian. When $\theta = 0$, the vector is in the axial direction, and when $\theta = \pi/2$. the radial direction. The locus of this equation (3) when $\theta$ varies from 0 to $\pi/2$

is just the curved line BP-M-P-CP shown in the figures. When the angle $\theta$ exceeds $\pi/2$, the locus becomes unusable. Therefore, for the other half of the tyre, a symmetric curve is used.

The above-mentioned equation (3) is very precisely defined. In practice, however, there is of course some degree of tolerance AL.

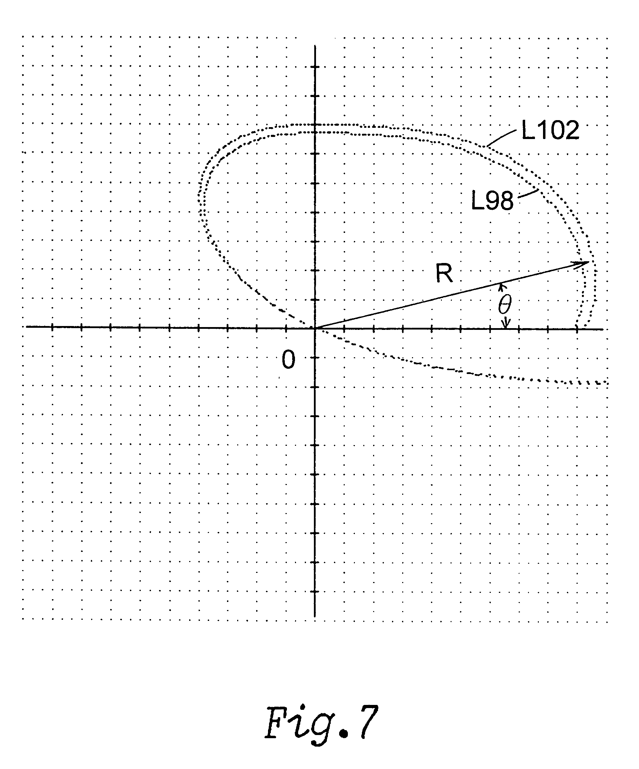

The inventors found that the maximum tolerance is +-4%, and less than +-2% is more preferable. In other words, when the locus of this equation (3) is named L100, a locus when the distance R is multiplied by (100+4)% is named L104, and a locus when the distance R is multiplied by (100-4)% is named L96, where the locus L104 is located outside L100 and L96 is located inside L100, the actual profile must be located between the locus L104 and locus L96, i.e., within the maximum tolerance of +-4%. When L102 and L98 corresponding to 102% and 98% are similarly defined, it is more preferable that the profile is between L102 and L98, i.e., within the tolerance of +-2%. See Fig.7.

From the intersecting point of the tyre equatorial plane C with the tread profile 2A (hereinafter tread equator point CP), the origin (O) is spaced apart radially inwardly by a distance of

$$70.63044 \times (SW/194) \text{ mm,}$$

where

SW is the maximum tyre section width in mm.

The origin (O) is positioned at the substantially same radial height as the radially outermost end of the flange (height G) of a standard wheel rim J on which the tyre is mounted. In this Embodiment, the flange height G is 17.3 mm. However, it is not so important to strictly set the height of the origin (O) as above because the most important point is that the target profile enters within the tolerance range AL of the above-explained template.
In this embodiment, the above explained profile definition using the equation (3) is applied to the range of from the equator point CP to a bead point BP at which the tyre outer surface comes into contact with the flange of the rim 11. That is, the tread profile and sidewall profile are defined.

Accordingly, the radius of curvature of the tyre outer surface gradually decreases from the point CP to the point BP.

As a result, the tyre profile, not only the tread profile but also sidewall profile, is provided with an optimised curvature, and the latent ground contacting region is increased. The ground contacting area increased at the time of cornering is well balanced with the ground contacting area during straight running. The shape change and area change thereof become smooth.

However, this definition by the equation (3) can be applied to only

(1) the portion between the maximum tyre sectional width points M and M,
(2) the portion between two points on the tyre outer surface each spaced apart from the tyre equatorial plane C by 40% (preferably 45%) of the maximum tyre section width SW,
(3) the portion between two intersecting points of the tyre outer surface with two straight lines each extending radially outwardly from the axial outermost edges of the belt 7, or
(4) the portion corresponding to the angle $\theta$ of from 90 and 30 degrees, preferably 90 to 20 degrees, more preferably 90 to 10 degrees, independently from the location of the tread portion edges N.

In any case, as explained above, the central portion between the points P and P may be excepted, but preferably, the central portion is also defined by the equation (3).

Incidentally, the radial height of the maximum tyre sectional width point M is in the range of from 25 to 75 %, preferably 25 to 50 %, more preferably 30 to 40 % of the tyre section height SH, each measured from the bead base line BL. The aspect ratio (SH/SW) of the pneumatic tyre is preferably set at about

$$(G/SW)+0.38015$$

where

G is the height of the flange of a wheel rim J on which the tyre is mounted. This will give a guidance to a preferable aspect ratio SH/SW when the tyre size and rim size are determined.

In this embodiment, the aspect ratio is 0.45, thus the sidewall portions 3 are very small in comparison with the conventional tyres.

As shown in Figs.1, 2, 3 and 4, the belt 7 comprises at least a jointless band belt 8.

The jointless band belt 8 comprises at least one spirally wound organic fibre cord. The cord angle is substantially 0 degree with respect to the circumferential direction of the tyre. The width BW of the jointless band belt 8 is not less than 0.75 times the tyre section maximum width SW.

The jointless band belt 8 is formed by spirally winding a single organic fibre cord or a ribbon of rubber in which a plurality of parallel organic fibre cords are embedded.
For example, the jointless band belt 8 is wound around a shaping drum having a contour similar to the tread profile, and then the drum decrease its diameter to take out the wound belt therefrom, and the took out belt is assembled with the carcass 6 and the like.

In this embodiment, a ribbon in which three 1500d/3 aramid fibre cords are embedded is used. The width of the ribbon is 0.30 to 1.00 cm, in this embodiment 0.42 cm. The cord count E per 1 cm width of the jointless band belt 8 is about 7.14. The aramid fibre cords used in this embodiment has a strength of 85 kgf per cord, and a middle elongation of 0.90%. The radius of the jointless band belt 8 measured at the tyre equatorial plane C is 29 cm. The tyre air pressure is $2.0 \text{kgf/cm}^2$.

As the jointless band belt 8 is formed by spirally winding the cord, no joint is formed in the circumferential direction. A ply separation failure during high speed rotation is controlled to improve the high speed durability.

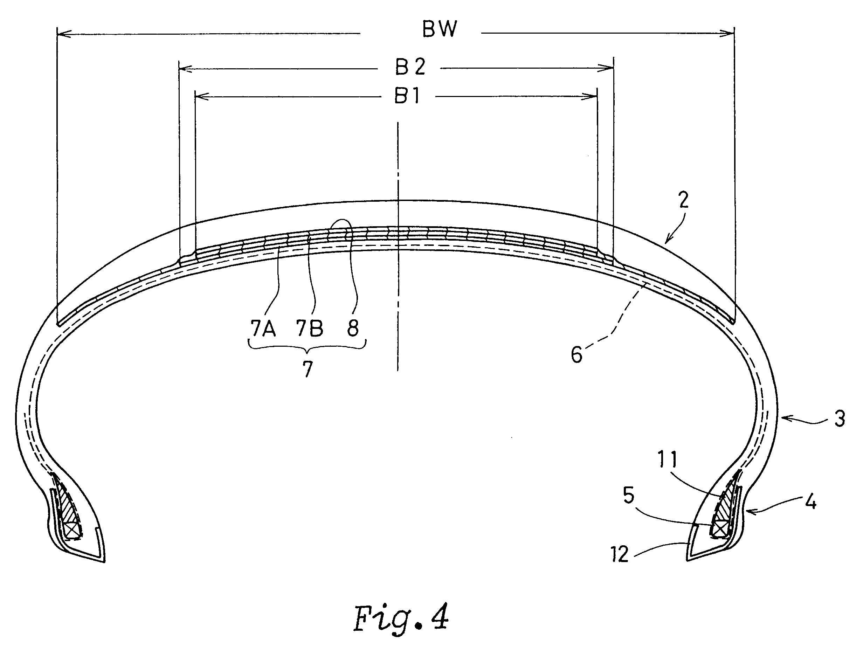

In Fig.1, the belt 7 consists of one jointless band belt 8 disposed on the outer surface of the carcass. However, it is possible that the belt 7 further comprises breaker plies 7A and 7B, in addition to the jointless band belt 8, as shown in Fig.4.

The breaker plies 7A and 7B are disposed on the outer surface of the carcass and radially inside the jointless band belt 8. The breaker plies 7A and 7B are cut plies made of a conventional tyre fabric, that is, a sheet of rubberised parallel organic fibre cords. In this embodiment, the organic fibre cords which are materially the same as the jointless band belt 8 is used. However, a different cord such as nylon, polyester, rayon can be used. As a result, the breaker cords is less required to satisfy the equations (1) and (2) than the jointless band belt cord.

When two or more cut breaker plies are disposed, the cords in each ply are oriented to cross the cords of the next ply. The axial width B1,B2 of the cut breaker plies 7A and 7B is preferably in the range of from 50 to 100%, more preferably 55 to 85% of the maximum tyre sectional width SW, and smaller than the axial width BW of the jointless band belt 8.

In Fig.4, the radially inner ply 7A is wider than the radially outer ply 7B. However, it may be reversed.

The above-mentioned jointless band belt 8 is provided with a radius of curvature which gradually decreases axially outwards from a point B on the outer surface of the jointless band belt 8 spaced apart from the tyre equatorial plane C towards each side thereof by an axial distance SP of 20% of the axial distance from the tyre equatorial plane C to the tread portion edge N.

Similar to the tread profile, a central part of the jointless band belt 8 from the tyre equatorial plane C to the point B, can be formed in a straight configuration, a single radius curve, or a variable radius curve whose radius of curvature RB is gradually decreased.

Preferably, the rate of the decrease of the radius of curvature is substantially constant.

The ratio (CB/BW) of the radial distance CB from the outer surface of the belt 7 at the tyre equatorial plane C to the axially outer most edges of a widest jointless band belt 8 to the axial width BW of the jointless band belt 8, is in the range of 0.15 to 0.30.

In this embodiment, using the following equation (6), the outer surface of the jointless band belt 8 is defined, that is,

$$R(\theta)=(89.02495+58.35249 \text{X} \theta-194.2836 \text{X} \theta^2 +168.7756 \text{X} \theta^3 -62.10578 \text{X} \theta^4 +8.747225 \text{X} \theta^5 ) \text{ X } (SW/194) \qquad (6)$$

The equation (6) is expressed in polar co-ordinates (R, $\theta$), in which a point BT is expressed by a distance R from the origin (O) and an angle $\theta$ made with a polar axis.

Similar to the equation (1) giving the carcass profile, in a meridian section of the tyre, the origin (O) is set on the tyre equator C, and the polar axis is set in parallel with the tyre axis. The range of the angle $\theta$ is from 0 to $\pi/2$ radian. When $\theta = 0$, the vector is in the axial direction, and when $\theta = \pi/2$ . the radial direction.

The origin (O) is disposed at near the radial height G of the flange of the wheel rim J.

The origin (O) is spaced radially inwardly apart from the intersecting point of the outer surface of the jointless band belt 8 with the tyre equatorial plane C by a distance of 60.99363 X (SW/194) mm.

Similar to the equation (1), there is some degree of the tolerance. The profile of the band belt 8, in at least its axially outer portion between the point B and the adjacent belt edge, more preferably its whole width, enters within a +-4 % tolerance, more preferably within a +-2% tolerance. Here, the meaning of the tolerance is similar to that in the equation (1). Therefore, the explanation is omitted.

In case of the tolerance being not more than +-2%, it is preferable that the outer surface run through points (R=60.99363X(SW/194) mm, $\theta=\pi/2$) and (R=89.02495X(SW/194) mm, $\theta=0$).

As to the thickness of the tread rubber 9 measured in the radial direction of the tyre, it is preferable that the thickness gradually decreases axially outwards in at least a region from the point P to each of the tread portion edges N. When assumed that the thickness measured at the equator CP is 100%, the thickness at the axially outermost edges of the belt 7 is preferably in the range of from 100 to 30 %, more preferably 80 to 40%. The thickness at the tread portion edge N is preferably 75 to 20 %, more preferably 50 to 25%.

It is however, possible to make the thickness constant, and also possible to gradually increase the thickness towards the edge N. Further, the jointless band belt 8 can be comprised of two plies of spirally wound cords.

By defining the tread profile as explained above, the footprint during straight running becomes a circumferentially elongated ellipse. At the time of cornering, the latent ground contacting region contacts with the ground to prevent the decrease in the ground contacting area, and a similar ellipse footprint is maintained. Further, by the provision of the jointless band belt 8, the tread profile is maintained through the entire tyre life.

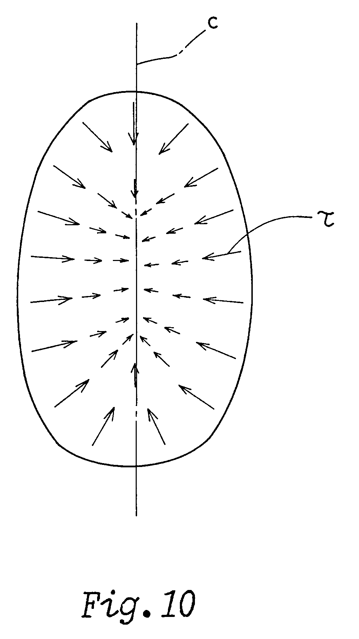

On the other hand, in the tread portion 2 according to the present invention, the camber quantity LC (mm), which is the radial distance from the tyre equator point CP to a point U on the tread profile, increases axially outwards. As a result, as shown in Fig.10, in the ground contacting region of the tread portion 2, stress towards the centre of this region is produced, and the magnitude thereof is large when the camber quantity LC(mm) is large. That is, the stress $\tau$ becomes larger near the tread portion edge N than the centre. If the stress $\tau$ exceeds the frictional force between the road surface and the tread, the tread partially slips on the road surface, and a partial wear is liable to occur in the lateral part of the tread than in the central part.

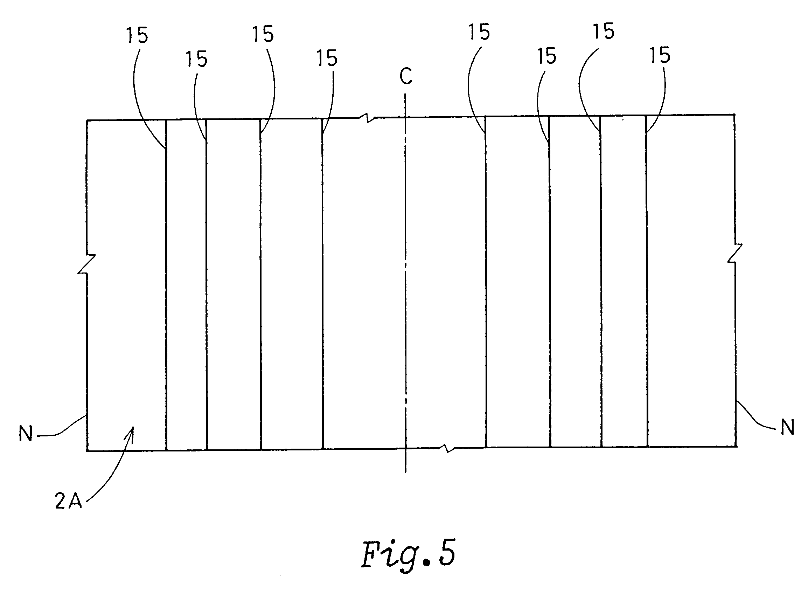

Therefore, in order to prevent such uneven wear, the tread portion 2 is preferably provided with a plurality of sipes 15, each extending straight in the tyre circumferential direction, as shown in Fig.5. As a result, the tread portion 2 is divided into a plurality of ribs.
Here, the sipe 15 is a narrow width slit or cut having a width of not more than 1 mm. The depth thereof is 4 to 1 2mm, more preferably 4 to 10 mm. For the sipes 15, not only a straight configuration but also zigzag and wavy configurations can be used either alone or in combination.

Further, it is possible to provide in the tread portion 2 with a very wide centre circumferential groove and the like.

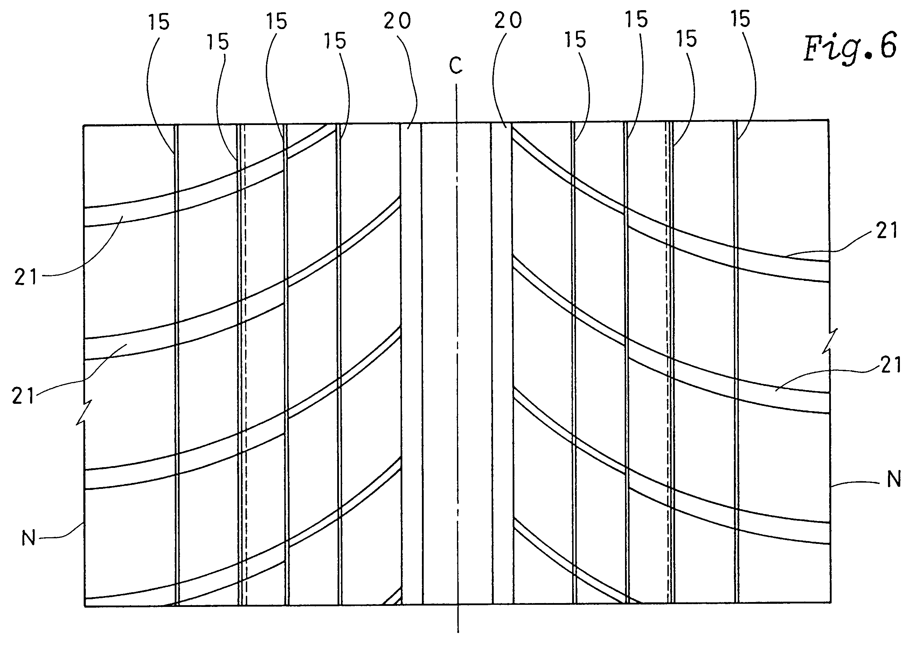

Fig.6 shows another example of the tread pattern, which comprises the above-mentioned sipes 15, a pair of wide circumferential grooves 20 each disposed on each side of the tyre equator C, and axial grooves 21 extending from the wide circumferential grooves 20 to the tread portion edge N.

Against a relatively small stress during straight running, the sip 15 changes its width, and the rib is easily moved, to prevent the slip on the road surface. During cornering, the tread portion 2 is subject to a relatively large lateral force, which close the sipes 15. As a result, the ribs function like a solid rubber, and a tread rigidity required for cornering is maintained. Thus the cornering performance can be improved. Thus a partial wear or uneven wear can be prevented.

Test tyres of size 215/45R16 (rim size 16X7 1/2) were made and tested as follows. All the test tyres had the same construction shown in Fig.1 except for the belt structure.

In Ex.1, the belt consists of one jointless band belt. In Ref.1, the belt consists of two breaker belts. In Ex.2-4 and Ref.2-4, the belt consists of one jointless band belt and two breaker belts. The specifications and test results are shown in Table 1.

(A) Lateral grip test

Under a wet condition (water depth = 2 to 3 mm), a 2000cc FF passenger car of which four wheels are provided with the test tyres was run on a asphalt road at a radius of 50 meters, to measure the minimum cornering time.

In Table 1, the time is indicated by an index based on that Ref.1 is 100. The larger the index, the better the cornering performance.

(B) Lateral hydro test

The above-mentioned car was run on an asphalt road provided with a 20 meter long 5 mm depth pool at a radius of 100 meters. The running speed was increased stepwise, and the lateral G was measured, and the average lateral G in the range of from 70 to 90 km/h speed was calculated.

In Table 1, the average is indicated by an index based on that Ref.1 is 100. The larger the value, the better the wet performance and cornering performance.

(C) High speed durability test

This test was conducted according to ECE30. Test conditions corresponding to the speed category V were adopted. That is, after running 20 minutes at 240 km/h, the running speed was increased by 10 km/h step every 20 minutes, and the tyre was run continuously until the tyre was broken. The tyre inner pressure was 3.0 bar (3.05 kg/cm$^2$), the tyre load was 386 kg, and the rim size was 16X8.

In Table 1, the speed at which the tyre was broken is indicated by an index based on that Ref.1 is 100. The larger the value, the better the durability.

(D) Durability test

After running for 30,000 km at 80 km/h, the outside and inside of the tyre were inspected for damage. The air pressure was 2.2 kg/cm$^2$, tyre load 598 kg, rim size 16X7.5.

(E) Appearance test

The appearance of the tyre was inspected for bare of rubber and the like.

Through the lateral grip test, it was confirmed that the tyres according to the present invention were greatly improved in the cornering performance. Through the lateral hydro test, it was confirmed that the tyres according to the present invention were greatly improved in the wet cornering performance. Further it was confirmed that the high speed durability can be effectively improved.

As explained above, in the tyres according to the present invention, the ground contacting shape during straight running is substantially an ellipse of which the major axis extends in the tyre circumferential direction. In the initial stage of cornering, the latent ground contacting region starts to contact with the ground, and in the middle stage of cornering, the ground contacting shape is maintained in a generally ellipse and the area is maintained or increased. Therefore, the applied large lateral force during cornering is uniformly shared in a wide ground contacting area, and thus the cornering performance is effectively increased.

Further, by the jointless band belt, the tread profile can be maintained through the whole tyre life. Thus, the improved cornering performance, high speed durability and the like are also maintained.

The present invention is applied to tyres for the vehicles having three or more wheels, especially suitably applied to passenger car tyres, but motorcycle tyres.

Table 1

| Tire | Ex.1 | Ex.2 | Ex.3 | Ex.4 | Ref.1 | Ref.2 | Ex.5 | Ref.3 | Ref.4 |
|---|---|---|---|---|---|---|---|---|---|
| Belt (Jointless, Breaker) | | | | | | | | | |
| Cord material | aramid | aramid | aramid | aramid | aramid | aramid | aramid | aramid | aramid |
| structure | 1500d/3 | 1500d/3 | 1500d/3 | 1500d/3 | 1500d/2 | 1500d/3 | 1500d/2 | 1500d/2 | 1500d/2 |
| Angle (1st/2nd/3rd)*1,2 (deg) | 0 | 24/24/0 | 45/45/0 | 24/24/0 | 24/24 | 24/24/0 | 24/24/0 | 24/24/0 | 24/24/0 |
| Width (1st/2nd/3rd)*1 (mm) | *3 200 | 164/148/200 | 164/148/200 | 124/108/200 | 190/180 | 164/148/200 | 164/148/200 | 160/148/200 | 160/148/120 |
| Jointless belt | | | | | *4 | | | | |
| Cord count E (/cm) | 7.15 | 7.15 | 7.15 | 7.15 | 8 | 7.15 | 8 | 8 | 8 |
| Cord tension t (kgf/cord) @ 2.0 kgf/sq.cm pressure | 8.1 | 8.1 | 8.1 | 8.1 | -- | 8.1 | 7.25 | 7.25 | 7.25 |
| Middle elongation S (%) | 0.9 | 0.9 | 0.9 | 0.9 | 1 | 0.4 | 1 | 2 | 3 |
| Measuring load (kgf) | 10.1 | 10.1 | 10.1 | 10.1 | 6.75 | 10.1 | 6.75 | 6.75 | 6.75 |
| Radius R (cm) | 29 | 29 | 29 | 29 | 29 | 29 | 29 | 29 | 29 |
| Pm X R/E (Pm=3.5 kgf/sq.cm) | 42.6 | 42.6 | 42.6 | 42.6 | 42.6 | 42.6 | 38.1 | 38.1 | 38.1 |
| Test results | | | | | | | | | |
| Appearance | Good | Good | Good | Good | Good | Bare | Good | Good | Good |
| Lateral grip | 110 | 120 | 115 | 115 | 100 | 120 | 115 | 110 | 100 |
| Lateral hydro | 110 | 105 | 108 | 108 | 100 | 105 | 108 | 105 | 100 |
| High speed durability | 120 | 110 | 107 | 113 | 100 | 113 | 107 | 103 | 100 |
| Durability | Good | Good | Good | Good | Good | Good | Good | *5 | *5 |

*1 In the order from the radially inside to outside.

Except for Ref.1, the radially outermost belt was the jointless belt formed by winding a ribbon.

*2 with respect to the tire equator

*3 a jointless belt only

*4 2nd Belt

*5 Cracks occurred in groove bottom

## Claims

1. A pneumatic tyre comprising a carcass (6) extending between a pair of bead portions (4), a tread rubber (9) disposed radially outside the carcass to define a tread portion (2) with a pair of tread portion edges, a jointless band belt (7) disposed between the carcass (6) and the tread rubber (9), the jointless band belt made of at least one spirally continuously wound organic fibre cord, the tread portion (2) extends axially outwardly beyond ground contact edges, the ground contact edges being the axially outermost edges of the ground contacting region of the tyre under a standard loaded state that the tyre is mounted on a standard rim, inflated to a standard inner pressure and loaded with a standard load and the camber angle is 0 degree; in a tyre meridian section under a standard unloaded state that the tyre is mounted on the standard rim, inflated to the standard inner pressure and not loaded, the profile of the tread portion being provided in at least axially outer part of a point P with a radius of curvature PC which gradually decreases towards the axially outside of the tyre, the point P being defined on the tread profile on each side of the tyre equatorial plane C at an axial distance of 20% of a half tread width, and the jointless band belt (7) satisfying the following equations (1) and (2)

$$tm > 3Pm*R/E \quad (1)$$

$$0.5 < S < 2.0 \quad (2)$$

where

tm = the strength (kgf) of each organic fibre cord,
Pm = the maximum air pressure (kgf/cm$^2$) for the tyre,
R = the radius (cm) of the jointless band belt measured at the tyre equator C (=diameter/2),
E = the cord count of the jointless band belt per 1cm width,
S = the middle elongation (%) of the organic fibre cord.

2. A pneumatic tyre according to claim 1, characterised in that the edges of the tread portion (N) lie near the maximum sectional width points (M) of the tyre.

3. A pneumatic tyre according to claim 1 or 2, characterised in that the decreasing rate of the radius of curvature RC of the tread portion (2) from the points P is substantially constant.

4. A pneumatic tyre according to claim 1, 2 or 3, characterised in that when a standard curve is defined by the locus of an equation:

$$R(\theta)=(92.46304+50.02951X\theta-109.1216X\theta^2 +43.74487X\theta^3 +7.385639X\theta^4$$
$$-4.776894X\theta^5) \times (SW/194) \{ 0 =< \theta =< \pi/2 \}$$

expressed in polar co-ordinates (R, θ) where

R is the distance from the origin set on the tyre equatorial plane,
θ is the angle made with the polar axis extending parallel with the tyre axis, and
SW = the maximum tyre sectional width in mm, the tread profile is entered within a plus minus 4% tolerance of the standard curve defined between a plus 4% tolerance curve and a minus 4% tolerance curve, the plus 4% tolerance curve is the locus when the distance R is increased by 104%, and a minus 4% tolerance curve is the locus when the distance R is decreased by 96%.

5. A pneumatic tyre according to claim 4, characterised in that the tread profile is entered within a plus minus 2% tolerance of the standard curve defined between a plus 2% tolerance curve and a minus 2% tolerance curve, the plus 2% tolerance curve is the locus when the distance R is increased by 102%, and a minus 2% tolerance curve is the locus when the distance R is decreased by 98%.

6. A pneumatic tyre according to claim 4, characterised in that the tread profile substantially coincide with the standard curve.

7. A pneumatic tyre according to claim 4, 5 or 6, characterised in that the radial distance of the origin measured radially inwardly from the tread surface at the tyre equator is substantially equal to {70.63044 X (SW/194)} mm.

8. A pneumatic tyre according to any one of claims 1 to 7, characterised in that the radial height of the edges of the tread portion from the bead base line is 25 to 50% of the tyre section height SH.

9. A pneumatic tyre according to any one of claims 1 to 8, characterised in that the ratio TH/SW of the radial distance TH from the tyre equator (C) to the edges of the tread portion (2) to the maximum tyre section width SW is in the range of from 0.12 to 0.3.

10. A pneumatic tyre according to any one of claims 1 to 9, characterised in that the aspect ratio (SH/SW) of the tyre is substantially equal to (G/SW)+0.38015, where G = the height of a flange of a wheel rim on which the tyre is mounted.

**Patentansprüche**

1. Luftreifen, umfassend eine Karkasse (6), die sich zwischen zwei Wulstabschnitten (4) erstreckt, einen Laufstreifengummi (9), der radial außerhalb der Karkasse angeordnet ist, so daß ein Laufstreifenabschnitt (2) mit zwei Laufstreifenabschnittskanten festgelegt ist, einen nahtlosen Bandgürtel (7), der zwischen der Karkasse (6) und dem Laufstreifengummi (9) angeordnet ist, wobei der nahtlose Bandgürtel aus mindestens einem spiralförmig endlos gewickelten organischen Fasercord hergestellt ist, der Laufstreifenabschnitt (2) sich axial in Richtung nach außen über Bodenkontaktkanten hinaus erstreckt, wobei die Bodenkontaktkanten die axial äußersten Kanten des Bodenkontaktbereiches des Reifens in einem belasteten Standardzustand sind, in dem der Reifen auf eine Standardfelge aufgezogen, auf einen Standardinnendruck aufgepumpt und mit einer Standardlast belastet ist und der Sturzwinkel 0 Grad beträgt; wobei in einem Meridianquerschnitt des Reifens in einem nicht belasteten Standardzustand, in dem der Reifen auf die Standardfelge aufgezogen, auf den Standardinnendruck aufgepumpt und nicht belastet ist, das Profil des Laufstreifenabschnitts zumindest in einem Teil, der axial außen in bezug auf einen Punkt P liegt, mit einem Krümmungsradius RC versehen ist, der allmählich in Richtung der axialen Außenseite des Reifens abnimmt, wobei der Punkt P auf dem Laufstreifenprofil auf jeder Seite der Äquatorialebene C des Reifens in einem axialen Abstand von 20% einer halben Laufstreifenbreite festgelegt ist, und der nahtlose Bandgürtel (7) die folgenden Gleichungen (1) und (2) erfüllt

$$tm > 3\ Pm * R/E \tag{1}$$

$$0,5 < S < 2,0 \tag{2}$$

   wobei

   tm = die Festigkeit (kgf) jedes organischen Fasercords ist,
   Pm = der maximale Luftdruck (kgf/cm$^2$) für den Reifen ist,
   R = der Radius (cm) des nahtlosen Bandgürtels ist, gemessen am Reifenäquator C (= Durchmesser/2),
   E = die Cordanzahl des nahtlosen Bandgürtels pro 1 cm Breite ist, und
   S = die mittlere Dehnung (%) des organischen Fasercords ist.

2. Luftreifen nach Anspruch 1,
   dadurch gekennzeichnet, daß die Kanten des Laufstreifenabschnitts (N) in der Nähe der Punkte der maximalen Querschnittsbreite (M) des Reifens liegen.

3. Luftreifen nach Anspruch 1 oder 2,
   dadurch gekennzeichnet, daß die Abnahmerate des Krümmungsradius RC des Laufstreifenabschnitts (2) ausgehend von den Punkten P im wesentlichen konstant ist.

4. Luftreifen nach Anspruch 1, 2 oder 3,
   dadurch gekennzeichnet, daß, wenn eine Standardkurve definiert ist durch die Ortskurve einer Gleichung:

$$R(\theta) = (92,46304 + 50,02951X\theta - 109,1216X\theta^2 + 43,74487X\theta^3 + 7,385639X\theta^4$$
$$- 4,776894X\theta^5) \ X \ (SW/194) \ \{0 =< \theta =< \pi/2\}$$

   ausgedrückt in Polarkoordinaten (R, θ), wobei

   R der Abstand von der ursprünglichen Stellung auf der Äquatorialebene des Reifens ist,
   θ der Winkel ist, der zur Polarachse gebildet wird, die sich parallel zur Reifenachse erstreckt, und
   SW = die maximale Querschnittsbreite des Reifens in mm ist, in das Laufstreifenprofil innerhalb einer Toleranz von plus minus 4% der Standardkurve eingetreten wird, die zwischen einer Toleranzkurve von plus 4% und einer Toleranzkurve von minus 4% definiert ist, wobei die Toleranzkurve von plus 4% die Ortskurve ist, wenn der Abstand R auf 104% vergrößert wird, und eine Toleranzkurve von minus 4% die Ortskurve ist, wenn der Abstand R auf 96% verkleinert wird.

5. Luftreifen nach Anspruch 4,
   dadurch gekennzeichnet, daß in das Laufstreifenprofil mit einer Toleranz von plus minus 2% der Standardkurve eingetreten wird, die zwischen einer Toleranzkurve von plus 2% und einer Toleranzkurve von minus 2% definiert ist, wobei die Toleranzkurve von plus 2% die Ortskurve ist, wenn der Abstand R auf 102% vergrößert wird, und eine Toleranzkurve von minus 2% die Ortskurve ist, wenn der Abstand R auf 98% verkleinert wird.

6. Luftreifen nach Anspruch 4,
   dadurch gekennzeichnet, daß das Laufstreifenprofil im wesentlichen mit der Standardkurve zusammenfällt.

7. Luftreifen nach Anspruch 4, 5 oder 6,
   dadurch gekennzeichnet, daß der radiale Abstand des Ursprungs, radial in Richtung nach innen von der Laufstreifenoberfläche am Reifenäquator gemessen, im wesentlichen gleich {70,63044 X (SW/194)} mm ist.

8. Luftreifen nach einem der Ansprüche 1 bis 7,
   dadurch gekennzeichnet, daß die radiale Höhe der Kanten des Laufstreifenabschnitts ausgehend von der Wulstbasislinie 25 bis 50% der Querschnittshöhe SH des Reifens beträgt.

9. Luftreifen nach einem der Ansprüche 1 bis 8,
   dadurch gekennzeichnet, daß das Verhältnis TH/SW des radialen Abstandes TH vom Reifenäquator (C) zu den Kanten des Laufstreifenabschnitts (2) zur maximalen Querschnittsbreite SW des Reifens im Bereich zwischen 0,12 und 0,3 liegt.

10. Luftreifen nach einem der Ansprüche 1 bis 9,
    dadurch gekennzeichnet, daß das Aspektverhältnis (SH/SW) des Reifens im wesentlichen gleich (G/SW) + 0,38015 beträgt, wobei G = die Höhe eines Horns einer Radfelge ist, auf die der Reifen aufgezogen ist.

## Revendications

1. Pneumatique comprenant une carcasse (6) qui s'étend entre deux parties de talon (4), un caoutchouc (9) de bande de roulement placé radialement à l'extérieur de la carcasse pour délimiter une partie de bande de roulement (2) avec deux bords de partie de bande de roulement, une ceinture (7) de bande sans raccord disposée entre la carcasse (6) et le caoutchouc (9) de la bande de roulement, la ceinture de bande sans raccord étant formée d'au moins un câblé de fibres organiques enroulé en spirale de façon continue, la partie de bande de roulement (2) s'étend axialement vers l'extérieur au-delà des bords de contact avec le sol, les bords de contact avec le sol étant les bords axialement les plus externes de la région de contact avec le sol du pneumatique à un état de charge normale lorsque le pneumatique est monté sur une jante normale, gonflé à une pression interne normale et chargé avec une charge normale avec un angle de cambrure de 0°, le profil de la partie de bande de roulement, dans une section méridienne du pneumatique à un état sans charge normale tel que le pneumatique est monté sur la jante normale, gonflé à la pression interne normale sans charge, étant formé, dans au moins une partie axialement externe d'un point P, avec un rayon de courbure RC qui diminue progressivement vers la partie axiale externe du pneumatique, le point P étant défini sur le profil de la bande de roulement de chaque côté du plan équatorial C du pneumatique à une distance axiale égale à 20 % de la demi-largeur de la bande de roulement, et la ceinture (7) de bande sans raccord correspondant aux équations suivantes (1) et (2)

$$tm > 3Pm*R/E \qquad (1)$$

$$0,5 < S < 2,0 \qquad (2)$$

avec

tm  = résistance mécanique (kgf) de chaque câblé de fibres organiques,
Pm  = pression pneumatique maximale (kgf/cm$^2$) du pneumatique,
R   = rayon (cm) de la ceinture de bande sans raccord mesuré à l'équateur C du pneumatique (= diamètre/2),
E   = nombre de câblés de la ceinture de bande sans raccord par centimètre de largeur,
S   = allongement médian (%) du câblé de fibres organiques.

2. Pneumatique selon la revendication 1, caractérisé en ce que les bords de la partie (N) de bande de roulement sont près des points de largeur maximale en coupe (M) du pneumatique.

3. Pneumatique selon la revendication 1 ou 2, caractérisé en ce que le taux de réduction du rayon de courbure RC de la partie de bande de roulement (2) depuis les points P est pratiquement constant.

4.  Pneumatique selon la revendication 1, 2 ou 3, caractérisé en ce que, lorsqu'une courbe standard est définie par le lieu d'une équation :

$$R(\theta) = (92,46304 + 50,02951 \times \theta - 109,1216 \times \theta^2 + 43,74487 \times \theta^3 + 7,385639 \times \theta^4$$

$$- 4,776894 \times \theta^5) \times (SW/194) \{0 \le \theta \le \pi/2\}$$

exprimée en coordonnées polaires (R, $\theta$), telles que R est la distance comprise entre l'origine placée sur le plan équatorial du pneumatique, $\theta$ est l'angle formé par l'axe polaire qui est parallèle à l'axe du pneumatique, et SW est la largeur maximale en coupe du pneumatique exprimée en millimètres, le profil de la bande de roulement se trouve dans une tolérance de $\pm 4$ % par rapport à la courbe standard définie entre une courbe à +4 % de tolérance et une courbe à -4 % de tolérance, la courbe à +4 % de tolérance est le lieu pour lequel la distance R est augmentée à 104 % et la courbe de tolérance -4% est le lieu auquel la distance R est réduite à 96 %.

5.  Pneumatique selon la revendication 4, caractérisé en ce que le profil de la bande de roulement est compris dans une tolérance de $\pm 2$ % de la courbe standard définie entre une courbe de tolérance +2 % et une courbe de tolérance -2 %, la courbe de tolérance +2 % étant le lieu obtenu lorsque la distance R est augmentée à 102 % et une courbe de tolérance -2 % est le lieu obtenu lorsque la distance R est réduite à 98 %.

6.  Pneumatique selon la revendication 4, caractérisé en ce que le profil de la bande de roulement coïncide pratiquement avec la courbe standard.

7.  Pneumatique selon la revendication 4, 5 ou 6, caractérisé en ce que la distance radiale de l'origine mesurée radialement vers l'intérieur de la surface de la bande de roulement à l'équateur du pneumatique est pratiquement égale à {70,63044 x (SW/194)} mm.

8.  Pneumatique selon l'une quelconque des revendications 1 à 7, caractérisé en ce que la hauteur radiale des bords de la partie de bande de roulement par rapport à la ligne de base des talons est de 25 à 50 % de la hauteur SH en coupe du pneumatique.

9.  Pneumatique selon l'une quelconque des revendications 1 à 8, caractérisé en ce que le rapport TH/SW de la distance radiale TH à l'équateur du pneumatique (C) des bords de la partie (2) de bande de roulement à la largeur maximale SW en coupe du pneumatique est compris entre 0,12 et 0,3.

10. Pneumatique selon l'une quelconque des revendications 1 à 9, caractérisé en ce que le rapport d'allongement (SH/SW) du pneumatique est pratiquement égal à (G/SW) + 0,38015, G étant la hauteur d'un flasque d'une jante de roue sur laquelle le pneumatique est monté.

Fig.1

EP 0 748 705 B1

Fig.2

Fig.3

EP 0 748 705 B1

Fig. 4

Fig.5

*Fig.6*

EP 0 748 705 B1

Fig.7

_Fig.8_

_Fig.11_

b

a

# Fig.9

EP 0 748 705 B1

C

C

C

(A)

(B)

(C)

*Fig. 10*

# Fig.12

(A)

(B)

(C)

EP 0 748 705 B1